# EUROPEAN PATENT SPECIFICATION

(11) **EP 2 047 716 B1**
(45) Date of publication and mention of the grant of the patent: **10.03.2010**
(21) Application number: 07735806.7
(22) Date of filing: 08.05.2007
(51) Int. Cl.: H05B 33/08, H05B 37/02, H05B 39/04, H05B 41/392, G02B 6/00, H04N 5/00, H04N 9/00

(54) **ILLUMINATION DEVICE**
BELEUCHTUNGSVORRICHTUNG
DISPOSITIF D'ÉCLAIRAGE

(30) Priority: 09.06.2006 EP 06115190
(43) Date of publication of application: 15.04.2009
(73) Proprietor: Koninklijke Philips Electronics N.V., 5621 BA Eindhoven (NL)
(72) Inventor: THOMASON, Graham G., 5656 AA Eindhoven (NL)
(74) Representative: Bekkers, Joost J.J
(86) International application number: PCT/IB2007/051723
(87) International publication number: WO 2007/141674

(56) References cited:
- WO-A-03/101098
- WO-A-2006/003604
- DE-A1- 4 207 417

## Description

### TECHNICAL FIELD

The present invention relates to an illumination device comprising a display unit for providing a video output.

### TECHNICAL BACKGROUND

Recently, rapid developments have been made in the area of lighting and illumination. For example, solid-state lighting devices (LEDs) are used to provide large controllable pixel arrays, thus enabling great flexibility in lighting ambiance and patterns. At the same time, such LED arrays can also be used as a large screen display, e.g. Philips Vidiwall. For instance the international patent application WO 03/101098 A1 shows a device in which the ambient light is controlled on the basis of the content of a video signal.

However, a problem in this context is that the light output from a LED array, or indeed any other type of traditional display, causes considerable variation of the ambient light (ambience). Therefore, if a specific ambience is desired (constant or varying), a simultaneous display of image content will interfere with the illumination.

### OBJECTS OF THE INVENTION

It is an object of the present invention to mitigate this problem, and to provide an illumination device capable of providing a desired ambience lighting while displaying an image content.

### SUMMARY OF THE INVENTION

According to the invention, this and other objects are achieved by an illumination device having a display unit, a display driver adapted to receive a video signal and to control a video output of said display unit based on said video signal, an illuminator unit comprising a plurality of additional light emitting elements, and a controller, adapted to receive said video signal and to control an additional light output from said illuminator unit in accordance with the video signal and a set point representing a desired total light output, such that said video output in combination with said additional light output approximates said desired total light output.

By enabling control of the total light output, an illumination device is achieved that can provide a desired illumination while at the same time displaying video content on the display unit. Therefore, video content can be displayed without interfering with the overall ambiance.

The controller is adapted to control the emitted light from the additional light emitting elements in accordance with a desired total light output and the video signal. In other words, the additional light emitting elements are controlled to emit light that in combination with the video output results in the desired total light output. Therefore, even with changing video content displayed on the display unit, the total light output can be predicted and controlled, to avoid any undesired influence on ambient light (ambience).

A device according to this invention may be thought of in two ways: as an illumination device with the ability to display, or as a display device with the ability to illuminate. As an illumination device with the ability to display, it has applications where occasional or relatively unobtrusive video is desirable, which might even be a relatively static announcement in a foyer of a hotel or conference venue. As a display device with the ability to illuminate, it could take the place of a television and room light at home, where one member of a family wants to watch a TV program, white another wants to read. In another application area, it is possible that street advertising at night could become subject to legal controls where the light output must be constant, to avoid irritation to pedestrians and local inhabitants and to avoid excessive distraction to vehicle drivers.

The invention can be more economical with energy consumption than with a separate, fixed, source of illumination and an independent display device, since with the invention the energy used on the display side is effectively put to double use, whereas in the prior art, the illuminator provides the basic light level, and the display consumes extra energy.

The control can be effected in respect of intensity and/or color. In case of color control, the additional light emitting elements preferably include elements for emitting different colors, and most preferably include at least red, green and blue light emitting elements. Such a design will enable a flexible control of the additional light output, and enable realization of many different total light outputs.

The desired total light output can be variable, resulting in a varying ambient lighting. This can be achieved by allowing the set point to vary.

The display unit can be any display that actively emits light, such as a CRT or a LED. The additional light emitting elements are preferably an array of LEDs, most preferably of different colors. When the display unit is a LED display, the display and the additional light emitting elements can be just different portions of one LED panel.

### BRIEF DESCRIPTION OF THE DRAWINGS

This and other aspects of the present invention will now be described in more detail, with reference to the appended drawings showing a currently preferred embodiment of the invention.

Figure 1 shows a schematic block diagram of a first embodiment of the present invention.

Figure 2 shows a schematic block diagram of a second embodiment of the present invention.

Figure 3a-c illustrates the operation of the illumination device in figure 1. Figure 4a-c illustrates the operation of the illumination device in figure 1 in a situation where full color compensation cannot be achieved.

Figure 5a-c illustrates the operation of the illumination device in figure 1 in a situation where full color compensation cannot be achieved.

### DETAILED DESCRIPTION OF PREFERRED EMBODIMENTS

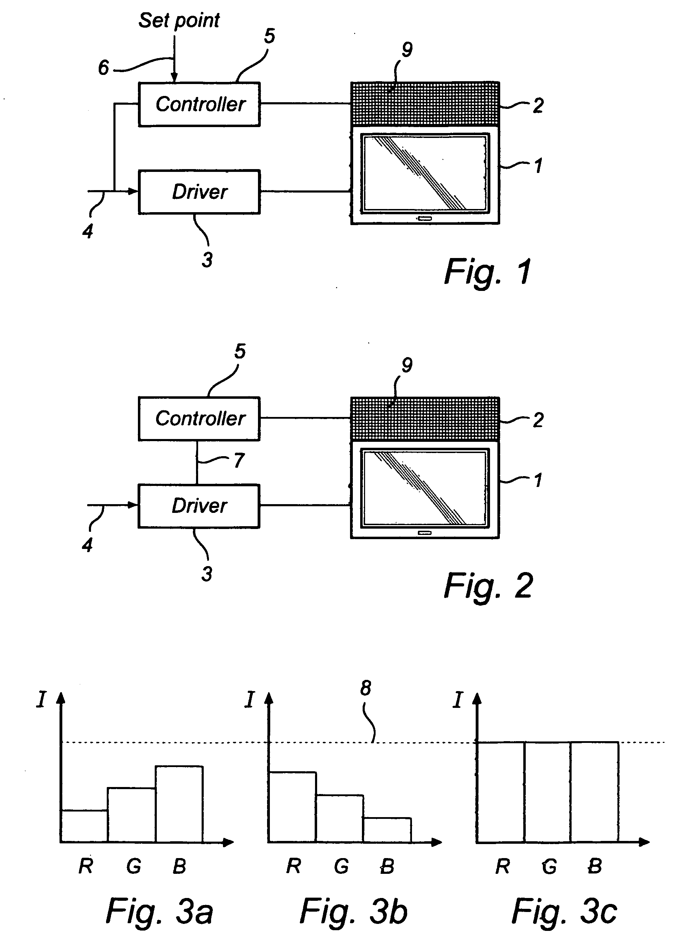

The illumination device shown in figure 1 has a display unit 1 and an auxiliary illuminator 2 comprising a set of additional light emitting elements (not shown in detail). The display unit can be e.g. a LED-based display or a CRT, or any other type of display that actively emits light. The auxiliary illuminator can be an array of LEDs, and can be integrated with the display unit. According to one embodiment, the display unit and the auxiliary illuminator are formed by separate portions of the same large area LED array.

The display unit is typically a color display, in which case the illuminator unit also must be capable of emitting light of different color, e.g. red, green and blue. Preferably, the illuminator unit is an array of LEDs comprising red green and blue LEDs 9.

The display unit 1 is controlled by a display driver 3, which operates the display unit to display a video content based on a video input signal 4. The same video signal 4 is also provided to a controller 5. arranged to control the light output from the auxiliary illuminator 2.

In operation, the controller is adapted to control the illuminator to emit light such that the total emitted light from both the illuminator and the display unit correspond to a desired ambient light (ambience). This desired ambience can be a fixed value. e.g. white light, that does not change. Alternatively, desired ambience is allowed to change over time. The time profile that defines how the ambience changes over time may use as its origin the time from the start of a film, rather than time from some arbitrary origin. In any case, the desired ambience can be represented by a set point 6, which can be pre-stored in the controller (in case of a fixed set point) or be supplied to the controller through a suitable interface (fixed or varying set point).

The set point can represent a desired color content as well as a desired intensity. The set point is preferably represented in terms of color contributions from the primary colors of the illuminator unit 3, e.g. red, green and blue in a typical three primary system.

In the embodiment in figure 1, the controller 5 is adapted to calculate complementary output levels based on the desired ambience and video input signal.

According to another embodiment, illustrated in figure 2, a film or video sequence can be provided with a pre-calculated complementary signal 7, intended to be used as control signal for the controller 5, The complementary signal 7 can be multiplexed into the video stream 4 and separated by the driver 3 as indicated in figure 2, or supplied via a separate channel. The use of a pre-calculated complementary signal 7 simplifies the controller 5, because the controller then does not have to calculate light levels itself, though it must retain synchronicity with the video. In a simple embodiment, synchronization would be done by having one light level signal per fixed unit of time: e.g. one signal per x microseconds

Figure 3a-c illustrates the control effected by the controller in the simple case of providing white ambient light. Figure 3a shows the aggregated RGB levels of the video signal at a given point in time. The desired total output is indicated by the level 8. Figure 3b shows the complementary RGB levels set by the controller, so that the combination of video output and illuminator output results in equal RGB levels, i.e. white light, as shown in figure 3c.

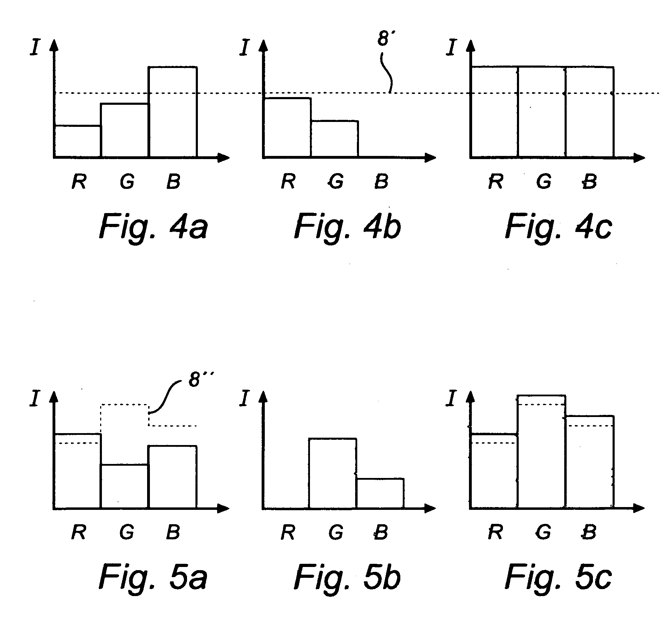

The level 8 indicates the desired intensity of the white light. This level can be as low as the maximum output level for any color of the video signal. If the desired intensity 8' is lower than this maximum level, full color compensation cannot be achieved without increasing intensity above the desired level. This is illustrated in figure 4a-c.

Figure 5a-c illustrates a different situation, where the desired total output 8" is not white. Here, it is possible that one of the RGB levels of the video signal (here the red level) exceeds the desired level. In such a case, again a full color compensation cannot be achieved without departing from the desired intensity, as indicated in figure 5b and 5c.

In cases such as those described, where full color compensation cannot be provided, instead of exceeding the intensity level, the display levels can be adjusted downwards, so that the video content is slightly distorted. Yet another alternative is to accept a total light output departing from the desired value. Finally, the deviation can be handled by combining several actions, such as decreasing the display output levels while at the same time exceeding the desired intensity level.

The methods of this invention could be adapted where the set point defines not a desired level of illumination and color, but a minimum level of illumination. This would soften the effect of a film or video sequence which had periods of complete, or almost complete, darkness.

The person skilled in the art realizes that the present invention by no means is limited to the preferred embodiments described above. On the contrary, many modifications and variations are possible within the scope of the appended claims. For example, one display unit could be provided with a plurality of auxiliary illuminators, each providing a different contribution to a total desired light output.

## Claims

1. An illumination device comprising a display unit (1), and a display driver (3) adapted to receive a video signal (4) and to control a video output of said display unit based on said video signal, **characterized in that** the illumination device further comprises:
an illuminator unit (2) comprising a plurality of additional light emitting elements, and
a controller (5), adapted to control an additional light output from said illuminator unit (2) in accordance with the video signal (4) and a set point (6) representing a desired total light output, such that said video output in combination with said additional light output approximates said desired total light output.

2. An illumination device according to claim 1, wherein said controller (5) is adapted to receive said video signal (4) and to calculate complementary output levels based on said video signal and said set point (6).

3. An illumination device according to claim 1 or 2, wherein said controller (5) is adapted to control the intensity and/or color of said additional light output.

4. An illumination device according to any one of the preceding claims, wherein said illuminator unit (2) includes elements (9) for emitting different colors.

5. An illumination device according to claim 4, wherein said illuminator unit (2) includes at least red, green and blue light emitting elements (9).

6. An illumination device according to any one of the preceding claims, wherein said set point (6) is variable.

7. An illumination device according to any one of the preceding claims, wherein said illuminator unit (2) is formed by an array of LEDs.

8. An illumination device according to any one of the preceding claims, wherein said display unit (1) is an array of LEDs.

9. An illumination device according to any one of the preceding claims, wherein said display unit (1) and said illuminator unit (2) are formed by one single LED panel.

10. An illumination device according to any one of claims 1-8, wherein said display unit (1) is a CRT.

## Patentansprüche

1. Beleuchtungsvorrichtung mit einer Displayeinheit (1) und einem Displaytreiber (3), der so eingerichtet ist, dass er ein Videosignal (4) empfängt und aufgrund des Videosignals eine Videoausgabe der Displayeinheit steuert, **dadurch gekennzeichnet, dass** die Beleuchtungsvorrichtung weiterhin umfasst:
eine Illuminatoreinheit (2) mit mehreren zusätzlichen, Licht emittierenden Elementen sowie
eine Steuereinheit (5), die so eingerichtet ist, dass sie eine zusätzliche Lichtleistung von der Illuminatoreinheit (2) gemäß dem Videosignal (4) und einem eine gewünschte Gesamtlichtleistung darstellenden Sollwert (6) so steuert, dass die Videoausgabe in Kombination mit der zusätzlichen Lichtleistung sich der gewünschten Gesamtlichtleistung nähert.

2. Beleuchtungsvorrichtung nach Anspruch 1, wobei die Steuereinheit (5) so eingerichtet ist, dass sie das Videosignal (4) empfängt und aufgrund des Videosignals und des Sollwerts (6) komplementäre Ausgangspegel berechnet.

3. Beleuchtungsvorrichtung nach Anspruch 1 oder 2, wobei die Steuereinheit (5) so eingerichtet ist, dass sie die Intensität und/oder Farbe der zusätzlichen Lichtleistung steuert.

4. Beleuchtungsvorrichtung nach einem der vorangegangenen Ansprüche, wobei die Illuminatoreinheit (2) Elemente (9) zum Emittieren verschiedener Farben enthält.

5. Beleuchtungsvorrichtung nach Anspruch 4, wobei die Illuminatoreinheit (2) zumindest rotes, grünes und blaues Licht emittierende Elemente (9) enthält.

6. Beleuchtungsvorrichtung nach einem der vorangegangenen Ansprüche, wobei der Sollwert (6) variabel ist.

7. Beleuchtungsvorrichtung nach einem der vorangegangenen Ansprüche, wobei die Illuminatoreinheit (2) durch ein LED-Array gebildet wird.

8. Beleuchtungsvorrichtung nach einem der vorangegangenen Ansprüche, wobei die Displayeinheit (1) ein LED-Array ist.

9. Beleuchtungsvorrichtung nach einem der vorangegangenen Ansprüche, wobei die Displayeinheit (1) und die Illuminatoreinheit (2) durch ein einzelnes LED-Panel gebildet werden.

10. Beleuchtungsvorrichtung nach einem der Ansprüche 1-8, wobei die Displayeinheit (1) eine Kathodenstrahlröhre ist.

## Revendications

1. Dispositif d'éclairage comprenant une unité d'affichage (1) et un pilote d'affichage (3) qui est adapté de manière à recevoir un signal vidéo (4) et à commander une sortie vidéo de ladite unité d'affichage sur la base dudit signal vidéo, **caractérisé en ce que** le dispositif d'éclairage comprend en outre :
une unité illuminatrice (2) comprenant une pluralité d'éléments additionnels émettant de la lumière, et
un contrôleur (5) qui est adapté de manière à commander un flux lumineux additionnel en provenance de ladite unité illuminatrice (2) selon le signal vidéo (4) et un point de consigne (6) représentant un flux lumineux total souhaité de telle façon que ladite sortie vidéo en combinaison avec ledit flux lumineux additionnel approche dudit flux lumineux total souhaité.

2. Dispositif d'éclairage selon la revendication 1, dans lequel ledit contrôleur (5) est adapté de manière à recevoir ledit signal vidéo (4) et à calculer des niveaux de sortie complémentaires sur la base dudit signal vidéo et dudit point de consigne (6).

3. Dispositif d'éclairage selon la revendication 1 ou selon la revendication 2, dans lequel ledit contrôleur (5) est adapté de manière à commander l'intensité et/ou la couleur dudit flux lumineux additionnel.

4. Dispositif d'éclairage selon l'une quelconque des revendications précédentes 1 à 3, dans lequel ladite unité illuminatrice (2) comprend des éléments (9) pour émettre des couleurs différentes.

5. Dispositif d'éclairage selon la revendication 4, dans lequel ladite unité illuminatrice (2) comprend au moins les éléments (9) émettant de la lumière ayant une couleur rouge, verte et bleue.

6. Dispositif d'éclairage selon l'une quelconque des revendications précédentes 1 à 5, dans lequel le point de consigne (6) est variable.

7. Dispositif d'éclairage selon l'une quelconque des revendications précédentes 1 à 6, dans lequel ladite unité illuminatrice (2) est formée par un ensemble de diodes électroluminescentes (DEL).

8. Dispositif d'éclairage selon l'une quelconque des revendications précédentes 1 à 7, dans lequel ladite unité d'affichage (1) est un ensemble de diodes électroluminescentes (DEL).

9. Dispositif d'éclairage selon l'une quelconque des revendications précédentes 1 à 8, dans lequel ladite unité d'affichage (1) et ladite unité illuminatrice (2) sont formées par un seul panneau à diodes électroluminescentes (DEL).

10. Dispositif d'éclairage selon l'une quelconque des revendications précédentes 1 à 8, dans lequel ladite unité d'affichage (1) est un tube à rayons cathodiques.
